# EUROPEAN PATENT SPECIFICATION

(11) **EP 2 311 738 B1**
(45) Date of publication and mention of the grant of the patent: **08.08.2012**
(21) Application number: 09173189.3
(22) Date of filing: 15.10.2009
(51) Int. Cl.: B65B 51/30

(54) **A packaging machine for producing sealed packages of pourable food products**
Verpackungsmaschine zur Herstellung versiegelter Verpackungen für gießbare Lebensmittelprodukte
Machine d' emballage pour fabriquer des emballages scellés de produits alimentaires versables

(43) Date of publication of application: 20.04.2011
(73) Proprietor: Tetra Laval Holdings & Finance S.A., 1009 Pully (CH)
(72) Inventor: Santi, Franco, 41100 Modena (IT)
(74) Representative: Jorio, Paolo

(56) References cited:
- EP-A- 0 887 270
- EP-A1- 0 887 269
- EP-A1- 0 992 431
- EP-A1- 1 092 631
- EP-A1- 1 125 847

## Description

The present invention relates to a packaging machine for producing sealed packages of pourable food products.

As is known, many pourable food products, such as fruit juice, UHT (ultra-high-temperature treated) milk, wine, tomato sauce, etc., are sold in packages made of sterilized sheet packaging material.

A typical example is the parallelepiped-shaped package for liquid or pourable food products known as Tetra Brik Aseptic (registered trademark), which is made by folding and sealing a web-rolled packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material, e.g. an aluminium foil, which is superimposed on a layer of heat-seal plastic material, and is in turn covered with another layer of heat-seal plastic material forming the inner face of the package eventually contacting the food product.

Packages of this sort are normally produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; the web so sterilized is then maintained in a closed, sterile environment, and is folded and sealed longitudinally to form a tube, which is fed vertically.

In order to complete the forming operations, the tube is filled with the sterilized or sterile-processed food product, and is sealed and subsequently cut along equally spaced cross sections; pillow packs are so obtained, which are then folded mechanically to form respective finished packages.

Packaging machines of the above type are known, in which the sections of the tube are sealed by two jaw units moved by respective arms so as to alternately grip the tube at successive sections for sealing. One jaw of each jaw unit comprises an induction heating element for locally melting the thermoplastic material when the jaw unit is gripped on to the tube, and so welding the thermoplastic covering to seal a cross section of the tube.

Each jaw unit performs a relatively complex operating cycle, in which the respective jaws are brought into contact with the tube at an upper station of the packaging machine; the unit, firmly gripping the tube, is lowered, together with the tube, along the feed axis of the tube to seal the cross section, and is then opened at a lower station of the packaging machine. The same cycle, offset by a time interval corresponding to the output rate of the machine, is also performed by the second unit, so that each package is formed by a portion of the tube extending between a first seal made by one jaw unit, and a second seal made successively by the other jaw unit.

Though widely used and dependable, known machines of the type described above are limited in terms of output rate, on account of the cyclic reciprocating movement of the large masses involved (arms, jaws and respective actuators), the inertia of which limits the output rate to a few thousand cycles/hour, over and above which, dynamic problems are encountered such as to impair operation of the machine.

To increase the output rate, continuous packaging machines have been proposed, which comprise two chain conveyors defining respective endless paths and respectively fitted with a number of jaws and counter-jaws. The two paths comprise respective branches substantially facing and parallel to each other, and between which the tube of packaging material is fed; the jaws on one conveyor, provided with respective heating elements, cooperate, along said branches of the respective paths, with corresponding counter-jaws on the other conveyor, provided with respective pressure elements, to grip the tube against the respective heating elements at a number of successive cross sections and so seal the packages.

Continuous chain conveyor systems provide, to some extent, for eliminating the dynamic problems and so increasing the maximum output rates imposed by reciprocating systems.

Though experimented for some time, to the Applicant's knowledge, machines of this sort have failed, as yet, to find a satisfactory practical application.

One of the problems posed by machines of the above type is the difficulty in accurately and reliably controlling the contact pressure exerted on the packaging material by the jaws and counter-jaws to form the seal, and which is generated by contact between control cams fixed to the machine structure and respective cam-following members traveling along the respective cams and associated with respective jaws and counter-jaws. As the contact pressure depends to a large extent on fabrication and assembly tolerances, on the wear of the cams and respective cam-following members, and on operating temperature, considerable difficulty is encountered in setting up the machine and maintaining optimum operating conditions.

Controlling the sealing pressure is essential for achieving a reliable production process ensuring no damage to the package, and so preserving the aseptic characteristics of the contents.

A solution to the above-mentioned problems is proposed in EP0887270, wherein each counter-jaw basically comprises a main body, in turn provided with respective cam-following members and forming a link of the relative chain conveyor, a pressure element fitted to and movable with respect to the main body in the direction of the gripping pressure, and elastic means interposed between the main body and the pressure element and defining the gripping pressure.

In particular, the pressure element is in the form of an elongated bar extending in a direction perpendicular to the tube supply path and connected to the main body by a pair of elastic connecting assemblies provided with the above-mentioned elastic means.

Each connecting assembly comprises a connecting shaft, which has opposite ends fitted to the main body and to the pressure element and extends, along an axis parallel to the direction of the gripping pressure, across relative through seats of the main body and the pressure element respectively with the interposition of a first and a second elastic element.

More specifically, one end of the connecting shaft is defined by a flange secured to a side of the main body, opposite the side facing the pressure element, by a number of screws, whilst the other end is coaxially secured to a stop washer having a peripheral edge cooperating axially with a surface edge of the seat of the pressure element.

The first elastic element is a stainless steel coil spring compressed in the direction of the gripping pressure between the flange end of the connecting shaft and a cup-shaped element slidable axially and loosely inside the seat of the main body and connected axially and radially to the pressure element.

The second elastic element is an elastomeric bush, which is axially packed between a shoulder of the connecting shaft and the stop washer and is radially sandwiched between the connecting shaft and the portion of the pressure element delimiting the relative seat. In this way, the second elastic element is axially and radially deformable to define, together with the first elastic element, the gripping pressure and to allow to compensate any misalignment between the main portion and the pressure element.

In use, the gripping and sealing pressure is applied in a percentage of 30% by the elastomeric bush and in a percentage of 70% by the stainless steel coil spring.

The applicant has observed that the elastomeric bush normally has a shorter lifetime than the stainless coil spring; this may depend on different factors, such as the chemical components used, the manufacturing process, the working conditions (temperature and humidity) and, least but not last, the fact that the elastomeric bush is subjected, during the machine operation, to both axial and radial loads.

Possible wearing-out of the elastomeric bush may impair the correct application of the gripping pressure and consequently the quality of the transversal seals on the packaging material.

It is an object of the present invention to provide a packaging machine for producing sealed packages of pourable food products, which provides for eliminating the aforementioned drawbacks typically associated with known machines.

According to the present invention, there is provided a packaging machine as claimed in claim 1.

A preferred, non-limiting embodiment of the present invention will be described by way of example with reference to the accompanying drawings, in which:
Figure 1 shows a view in perspective, with parts removed for clarity, of a packaging machine in accordance with the teachings of the present invention;
Figure 2 shows a partial schematic side view of the Figure 1 machine, with parts removed for clarity;
Figure 3 shows a view in perspective of a jaw and a corresponding counter-jaw of the Figure 1 machine;
Figure 4 shows a front view of the Figure 3 counter-jaw;
Figure 5 shows a section along line V-V in Figure 4; and
Figure 6 shows a larger-scale detail of Figure 5.

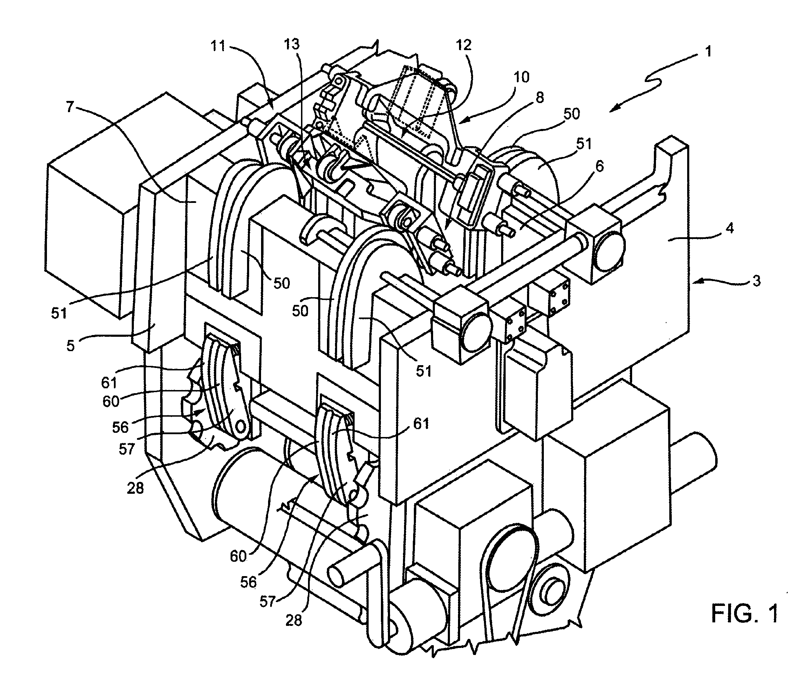

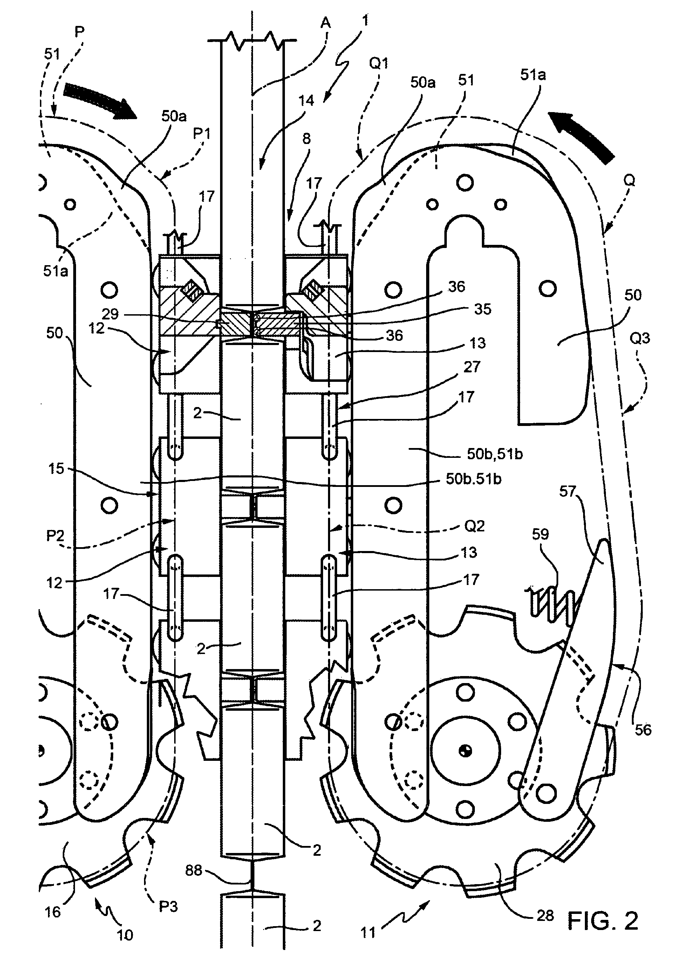

With reference to Figures 1 and 2, number 1 indicates as a whole a packaging machine for continuously producing, from a tube 14 of packaging material, sealed packages 2 containing a pourable food product, such as pasteurized or UHT milk, fruit juice, wine, etc.

Tube 14 is formed in known manner by longitudinally folding and sealing a web of heat-seal material, and is filled upstream with the sterilized or sterile-processed food product for packaging.

Machine 1 comprises a frame 3 (Figure 1) defined by two side walls 4, 5 and by two parallel transverse walls 6, 7 fitted rigidly between side walls 4, 5 and defining, with side walls 4, 5, an opening 8, and two chain conveyors 10, 11 fitted to frame 3 and respectively comprising jaws 12 (only one shown in Figure 1) and counter-jaws 13 (only one shown in Figure 1) cooperating with each other to interact with the tube 14 of packaging material fed along a vertical path A through opening 8.

In practice, each jaw 12 and the corresponding counter-jaw 13 are cyclically movable between a gripping position, in which they pressure grip a cross section of tube 14, and a release position, in which they are released from tube 14.

Conveyors 10 and 11 define respective endless paths P and Q along which jaws 12 and counter-jaws 13 are fed, and which respectively extend about walls 6 and 7 of frame 3.

Conveyor 10 comprises an articulated chain 15 extending along path P, and two drive wheels 16 (only one shown in Figure 2) meshing with and on both sides of chain 15 at the bottom end of path P. Jaws 12 are an integral part of, and define, alternate links of chain 15, and are connected to one another in articulated manner by pairs of link rods 17.

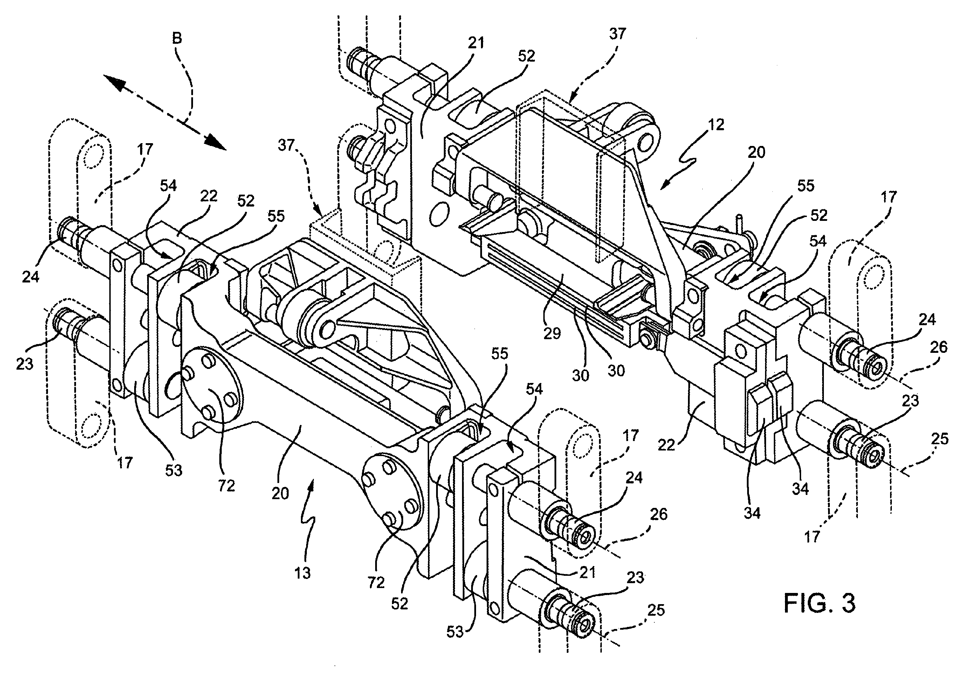

More specifically, each jaw 12 (Figure 3) comprises an elongated main body 20 extending in a direction B perpendicular to path A and parallel to wall 6, and having respective end projections 21 and 22, each of which has a projecting first and second pin 23, 24 spaced with respect to each other and having respective axes 25, 26 parallel to the main dimension of body 20 and to direction B. Link rods 17 pivot on pins 23, 24 of jaws 12 so as to connect pins 23 of one jaw 12 to pins 24 of the adjacent jaw.

Similarly, conveyor 11 comprises an articulated chain 27 extending along path Q, and two drive wheels 28 meshing with chain 27 at the bottom end of path Q. Chain 27 is defined by a number of counter-jaws 13 connected in articulated manner to one another and only described in detail insofar as they differ from jaws 12, and using the same numbering system for any parts similar or corresponding to those described in connection with jaws 12. Briefly, each counter-jaw 13 comprises a main body 20 having pairs of end pins 23, 24 about which link rods 17 pivot to connect adjacent pairs of counter-jaws 13.

Each jaw 12 comprises a heating element 29, such as an induction heating element, fitted to main body 20 in the direction B, and which in turn comprises a pair of straight, parallel active surfaces 30, and is electrically supplied.

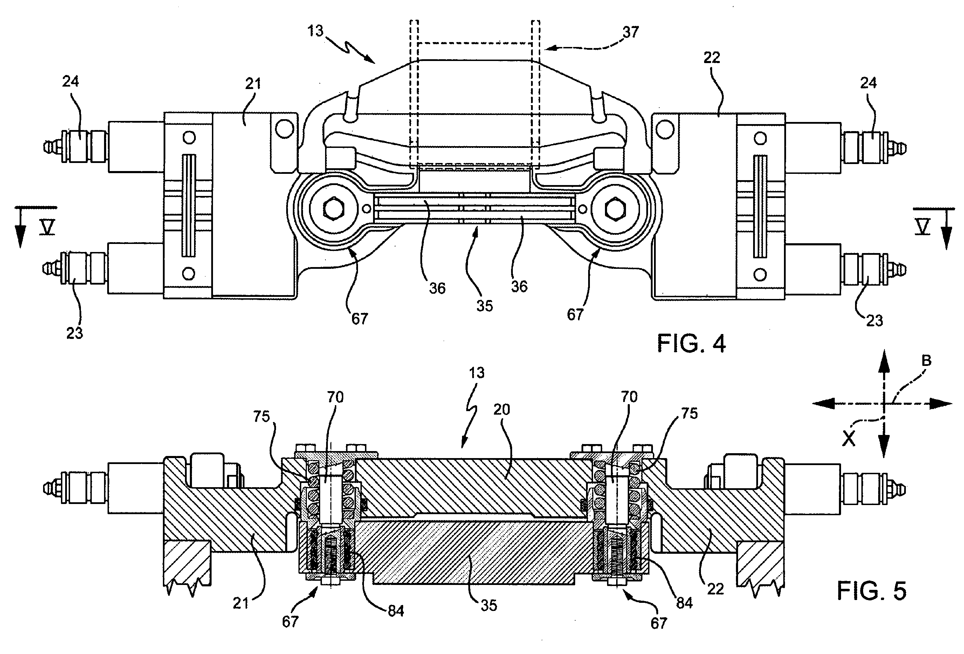

As opposed to heating element 29, each counter-jaw 13 (Figures 4 and 5) comprises a pressure bar 35, which cooperates with heating element 29 of corresponding jaw 12 to grip a cross section of tube 14 (Figure 2). On a front surface facing corresponding jaw 12 in use, bar 35 comprises two bands 36 of relatively flexible elastomeric material, which cooperate with the packaging material in opposition to the active surfaces 30 of heating element 29.

Jaws 12 and counter-jaws 13 each comprise a respective control device 37 - not forming part of the present invention, and therefore not described in detail
- for controlling the volume of package 2 as it is being formed.

The movement of jaws 12 and counter-jaws 13 is controlled by respective pairs of cams 50, 51 fitted to walls 6, 7 of frame 3 and cooperating with respective pairs of rollers 52, 53 on jaws 12 and counter-jaws 13.

More specifically, and as shown in Figure 3, jaws 12 and counter-jaws 13 each comprise a first pair of rollers 52, 53 fitted idly inside end projection 21 of main body 20, and a second pair of rollers 52, 53 fitted idly inside end projection 22 of main body 20; each projection 21, 22 comprises a pair of parallel, side by side seats 54, 55 formed on the rear side (i.e. the side facing away from heating element 29 or pressure bar 35) and extending in a direction perpendicular to axes 25, 26 of pins 23, 24 and substantially parallel to the plane defined by axes 25, 26.

The roller 53 in each pair is housed inside a respective outer seat 54 (i.e. closer to the end of body 20) and fitted to a respective pin 23, and the roller 52 in each pair is housed inside a respective inner seat 55 and fitted to a respective pin 24.

Wall 6 (Figure 1) is fitted with two pairs of cams 50, 51 which cooperate with respective pairs of rollers 52, 53 of jaws 12; similarly, wall 7 is fitted with two pairs of cams 50, 51 which cooperate with respective pairs of rollers 52, 53 of counter-jaws 13.

Cams 50, 51 comprise respective substantially U-shaped portions 50a, 51a, extending about the top edge of respective walls 6, 7 to define, for respective chains 15, 27 of conveyors 10, 11, a transmission opposite respective drive wheels 16 and 28, and respective portions 50b, 51b extending along respective walls 6, 7, inside opening 8. Portions 50a, 51a define path portions P1, Q1 along which jaws 12 and counter-jaws 13, starting from their release position, approach and contact tube 14 of packaging material, and portions 50b, 51b define facing, substantially parallel path portions P2, Q2 along which jaws 12 and counter-jaws 13 are maintained in their gripping position, in which contact under pressure to form the seals defining packages 2.

Cams 50, 51 release respective chains 15, 27 at respective portions P3, Q3 of paths P and Q downstream from respective drive wheels 16, 28.

Along portions P3, Q3, chains 15, 27 cooperate with respective pairs of tightener 56 for so tensioning the chains as to ensure rollers 52, 53 of jaws 12 and counter-jaws 13 are maintained contacting relative cams 50, 51.

Each tightener 56 comprises a movable shoe 57 hinged about a horizontal axis to a support fixed to wall 6 or 7, and a spring 59 interposed between shoe 57 and wall 6 or 7. On the face facing away from wall 6 or 7, shoe 57 comprises two side by side rolling tracks 60, 61, which, by virtue of spring 59, cooperate respectively with rollers 52 and 53 of jaws 12 or counter-jaws 13.

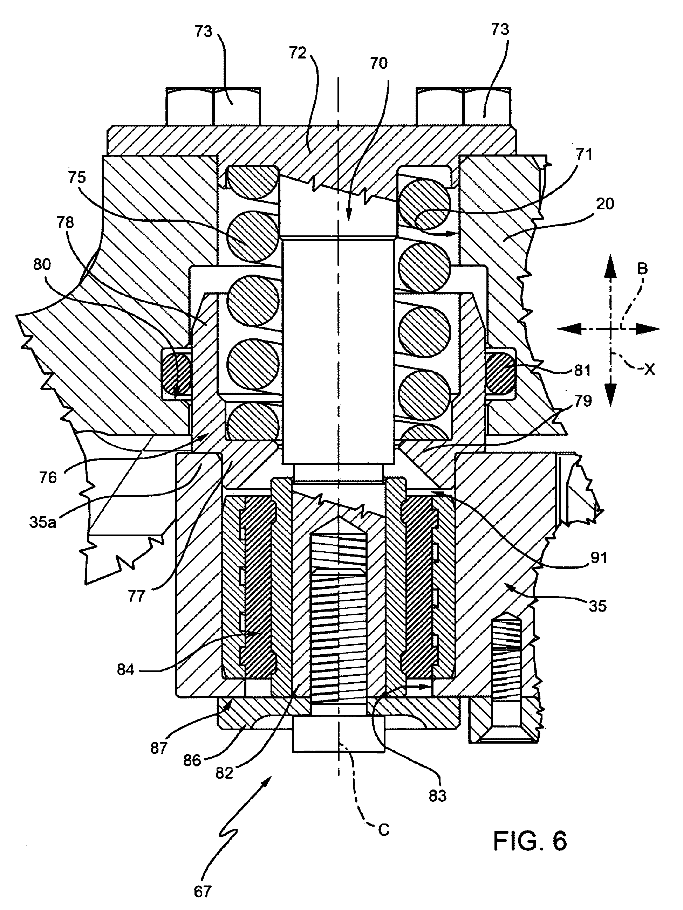

Pressure bar 35 of each counter-jaw 13 is so fitted to main body 20 as to be allowed a limited amount of movement in a direction perpendicular to path A and direction B and to the plane defined by axes 25, 26 of pins 23, 24; which direction, indicated X in Figures 5 and 6, defines, in use, the direction in which pressure is applied by each jaw/counter-jaw pair on tube 14.

Bar 35 is fitted to main body 20 via the interposition of two elastic connecting assemblies 67 for generating, in use, a reaction pressure in direction X to keep bar 35 against respective jaw 12.

Assemblies 67 are located at opposite ends of bar 35 and a larger-scale section of one of assemblies 67 is shown in Figure 6, to which reference is made below.

Each assembly 67 basically comprises a connecting element 70 having an axis C parallel to direction X, and which is coaxially fitted, with ample radial slack, through a substantially cylindrical through cavity 71 in main body 20, and comprises an end flange 72 fitted to the rear of body 20 by a number of screws 73 about cavity 71.

Cavity 71 houses a first elastic element 75, preferably a coil spring made of stainless steel wire, which is compressed along direction X between flange 72 and a cup-shaped abutting element 76 slidable axially and loosely inside cavity 71 and abutting axially and radially against a portion 35a of bar 35 facing main body 20. More specifically, abutting element 76 comprises an annular base wall 77 cooperating axially with elastic element 75, and a cylindrical wall 78 arranged loosely inside cavity 71 and partially housing one end of elastic element 75; base wall 77 comprises a tapered inner knife edge 79.

Cavity 71 also comprises a circumferential groove 80 housing an annular seal 81, which cooperates in sliding manner with cylindrical wall 78 of element 76; cavity 71 and abutting element 76 are conveniently filled with lubricating grease.

A smaller-diameter end portion 82 of shaft 70 is housed inside a cylindrical cavity 83 of pressure bar 35 via the interposition of a second elastic element 84, preferably a bush of elastomeric material, such as rubber. A stop washer 86, coaxial with shaft 70, is fitted to the end of end portion 82 of the shaft; the peripheral edge of washer 86 cooperates axially with a corresponding annular surface 87 extending around cavity 83 of bar 35 to hold bar 35 against abutting element 76 in opposition to elastic element 75. As shown in Figure 6, base wall 77 of abutting element 76 defines a locating collar engaging cavity 83 of pressure bar 35.

In practice, cavities 71 and 83 communicate along axis C with each other and define, as a whole, a seat 91 for the relative assembly 67.

As a result of the above-described arrangement, elastic element 75 is compressed, along direction X, between main body 20 and pressure bar 35 via abutting element 76.

Advantageously, elastic element 84 is mounted inside seat 91 with play along axis C, and therefore along direction X, and is sandwiched radially, or along a direction parallel to direction B, between end portion 82 of shaft 70 and the portion of bar 35 delimiting cavity 83. In practice, elastic element 84 is coupled with main body 20 and pressure bar 35 in a freely movable way along direction X so that the gripping pressure on tube 14 is defined entirely by first elastic element 75.

In this way, deformability of elastic element 84 is used only to compensate any misalignment between the relative counter-jaw 13 and the corresponding jaw 12 in the gripping position on tube 14.

In practice, elastic element 84 is so configured to allow the relative pressure bar 35 and the corresponding heating element 29 to be substantially parallel to each other when they act on tube 14 in the gripping position of the relative jaw 12 and counter-jaw 13.

Preferably, elastic element 84 is formed by an elastomeric ring sandwiched between two stainless steel rings.

Machine 1 operates as follows.

Conveyors 10, 11 are rotated in known manner in opposite directions, as indicated by the arrows in Figure 2, so that, from the end of portions P1, Q1 of respective paths P, Q and along respective portions P2, Q2, respective jaws 12 and counter-jaws 13 cooperate with tube 14 of packaging material according to a movement defined by the profiles of cams 50, 51.

After a first stage wherein tube 14 is contacted and gradually compressed, and the packaging material is folded locally to form a flat sealing strip 88 extending crosswise to tube 14, jaws 12 and counter-jaws 13 reach respective straight portions 50b, 51b of cams 50, 51 (Figure 2) where maximum gripping pressure is applied to tube 14 and heating element 29 of each jaw 12 is supplied to form the heat seal.

The distance between portions 50b and between portions 51b of respective substantially homologous cams 50, 51 of jaws 12 and counter-jaws 13 is constant along the greater part of said portions, and is so selected as to slightly compress and deform elastic elements 75 of counter-jaws 13.

When bar 35 of a counter-jaw 13 cooperates with heating element 29 of the corresponding jaw 12 to grip the packaging material, the pressure to which bar 35 is subjected in gripping direction X is entirely transmitted to elastic elements 75 via respective cup-shaped elements 76, as elastic elements 84 can slide freely along direction X within respective seats 91.

In this way, the gripping pressure exerted on the packaging material of tube 14 is determined by the preload of elastic elements 75.

The advantages of machine 1 according to the present invention will be clear from the foregoing description.

In particular, in the new arrangement, the gripping pressure is applied by stainless steel elastic elements 75 only, as rubber elastic elements 84 are free to move axially along respective connecting elements 70; in this way, no axial load is applied on the rubber elastic elements 84 when the gripping and sealing operations are performed on tube 14. This means a better control of the gripping and sealing pressure, which cannot be affected by wearing-out of the rubber elastic elements, and an increase of the lifetime of the latter components.

In practice, rubber elastic elements 84 are only used to allow compensation of any misalignment between main bodies 20 and the respective pressure bars 35; in other words, through their deformation, rubber elastic elements 84 allow each pressure bar 35 to adapt its position to a certain, albeit limited, extent, so that, even in the event of minor positioning errors of pressure bar 35, due to machining and assembly tolerances, the pressure bar 35 exerts uniform pressure along the whole of the sealing portion.

Clearly, changes may be made to machine 1 as described and illustrated herein without, however, departing from the scope defined in the accompanying claims.

## Claims

1. A packaging machine (1) for producing sealed packages (2), containing a pourable food product, from a tube (14) made of heat-seal packaging material in sheet form, fed along a supply path (A), and filled with said food product; said machine (1) comprising:
- at least a jaw (12) and a counter-jaw (13) cyclically movable between a gripping position, in which they pressure grip a cross section of said tube (14), and a release position, in which they are released from the tube (14);
- actuator means (50, 51) for controlling the cyclic movements of said jaw (12) and said counter-jaw (13) with respect to said tube (14);
- heating means (29) carried by said jaw (12) for heat-sealing the packaging material of the tube (14);and
- a pressure element (35) carried by said counter-jaw (13) for exerting a gripping pressure along a first direction (X) transversal to said path (A), to grip the packaging material of the tube (14) against said heating means (29) in the gripping position of said jaw (12) and said counter-jaw (13);
said counter-jaw (13) comprising a main body (20), cooperating with said actuator means (50, 51), and at least one elastic connecting assembly (67) connecting said pressure element (35) to said main body (20) in a movable manner along said first direction (X) through the interposition of elastic means (75, 84);
said elastic means comprising at least a first elastic element (75), compressed, along said first direction (X), between said main body (20) and said pressure element (35), and a second elastic element (84) mounted between said main body (20) and said pressure element (35) and which is deformable to allow to compensate any misalignment between said jaw and said counter-jaw in said gripping position;
**characterized in that** said second elastic element (84) is arranged in a freely movable way along said first direction (X) with respect to said main body (20) and said pressure element (35) so that the gripping pressure on said tube (14) is defined entirely by said first elastic element (75).

2. A machine as claimed in claim 1, wherein said elastic connecting assembly (67) comprises a connecting element (70) extending in said first direction (X) through respective cavities (71, 83) of said main body (20) and said pressure element (35) and having a first end (72) fitted to said main body (20) and a second end (82) fitted to said pressure element (35), said first and second elastic element (75, 84) being arranged around said connecting element (70), at different locations along said first direction (X) and within a seat (91) defined by said cavities (71, 83).

3. A machine as claimed in claim 2, wherein said first elastic element (75) is compressed in said first direction (X) between said first end (72) of said connecting element (70) and a portion (35a) of said pressure element (35).

4. A machine as claimed in claim 3, wherein said elastic connecting assembly (67) further comprises an abutting element (76) slidably coupled onto said connecting element (70) along said first direction (X) and cooperating, on opposite sides, with said portion (35a) of said pressure element (35) and said first elastic element (75).

5. A machine as claimed in claim 4, wherein said abutting element (76) is cup-shaped and has a base wall (77), cooperating with said first elastic element (75) along said first direction (X), and a lateral wall (78) sliding inside said seat (91) and partially housing said first elastic element (75).

6. A machine as claimed in any one of claims 2 to 5, wherein said second elastic element (84) is sandwiched between said pressure element (35) and said connecting element (70) along a second direction (B) transversal to said first direction (X) and to said path (A).

7. A machine as claimed in any one of claims 2 to 6, wherein said second elastic element (84) is in use free to move within said seat (91) along said first direction (X) between said second end (82) of said connecting element (70) and said first elastic element (75).

8. A machine as claimed in any one of the foregoing claims, wherein said first elastic element (75) is a coil spring.

9. A machine as claimed in any one of the foregoing claims, wherein said second elastic element (84) comprises a ring of elastomeric material.

10. A machine as claimed in claim 9, wherein said second elastic element (84) comprises two stainless steel rings, between which said elastomeric ring is sandwiched.

11. A machine as claimed in any one of the foregoing claims, wherein said pressure element (35) is in the form of an elongated bar extending transversally to said first direction (X) and said path (A), and wherein two of said elastic connecting assemblies (67) are provided for connecting said pressure element (35) to said main body (20) close to respective opposite ends of the pressure element (35).

12. A machine as claimed in any one of the foregoing claims, wherein said actuator means comprise cam guide means (50, 51) for guiding said jaw (12) and said counter-jaw (13) during their cyclic movements with respect to said tube (14), and wherein said jaw (12) and said counter-jaw (13) comprise cam-following means (52, 53) cooperating with said respective cam guide means (50, 51).

13. A machine as claimed in any one of the foregoing claims, wherein it comprises:
- a first chain conveyor (10) having a number of said jaws (12), and defining an endless first path (P) along which said jaws (12) are fed; and
- a second chain conveyor (11) having a number of said counter-jaws (13), and defining an endless second path (Q) along which said counter-jaws (13) are fed;
said first and said second path (P; Q) comprising respective work portions (P1, P2; Q1, Q2) adjacent to said supply path (A) of the tube (14) of packaging material, and extending substantially symmetrically on opposite sides of said supply path (A), so that said jaws (12) cooperate with respective said counter-jaws (13) to grip said tube (14) at respective equally spaced cross sections (88).

## Patentansprüche

1. Verpackungsmaschine (1) zur Herstellung versiegelter Verpackungen (2), enthaltend ein gießbares Lebensmittelprodukt, aus einem Rohr (14) aus einem heißsiegelbaren Verpackungsmaterial in Bogenform, welches entlang einem Lieferpfad (A) zugeführt wird und mit dem Lebensmittelprodukt gefüllt ist; wobei die Maschine (1) umfasst:
- wenigstens eine Backe (12) und eine Gegenbacke (13), welche zyklisch zwischen einer Greifposition, in welcher sie mit Druck einen Querschnitt des Rohrs (14) greifen, sowie einer Löseposition, in welcher sie von dem Rohr (14) gelöst sind, beweglich sind;
- Betätigungsmittel (50, 51) zum Steuern der zyklischen Bewegungen der Backe (12) und der Gegenbacke (13) im Verhältnis zu dem Rohr (14);
- Heizmittel (29), welche von der Backe (12) zum Heißsiegeln des Verpackungsmaterials des Rohrs (14) getragen werden; und
- ein Druckelement (35), welches von der Gegenbacke (13) getragen wird, um einen Greifdruck entlang einer ersten Richtung (X) quer zu dem Pfad (A) auszuüben, um das Verpackungsmaterial des Rohrs (14) gegen die Heizmittel (29) in der Greifposition der Backe (12) und der Gegenbacke (13) zu greifen; wobei die Gegenbacke (13) einen Hauptkörper (20) umfasst, welcher mit den Betätigungsmitteln (50, 51) zusammenwirkt, sowie wenigstens eine elastische Verbindungsanordnung (67), welche das Druckelement (35) mit dem Hauptkörper (20) beweglich entlang der ersten Richtung (X) durch die Zwischenschaltung elastischer Mittel (75, 84) verbindet;
wobei die elastischen Mittel wenigstens ein erstes elastisches Element (75) umfassen, welches entlang der ersten Richtung (X) zusammengedrückt ist, zwischen dem Hauptkörper (20) und dem Druckelement (35), sowie ein zweites elastisches Element (84), welches zwischen dem Hauptkörper (20) und dem Druckelement (35) angebracht ist und verformbar ist, um den Ausgleich jeglichen Versatzes zwischen der Backe und der Gegenbacke in der Greifposition zu ermöglichen;
**dadurch gekennzeichnet, dass** das zweite elastische Element (84) frei beweglich entlang der ersten Richtung (X) im Verhältnis zu dem Hauptkörper (20) und dem Druckelement (35) angeordnet ist, so dass der Greifdruck an dem Rohr (14) vollständig durch das erste elastische Element (75) definiert wird.

2. Maschine nach Anspruch 1, wobei die elastische Verbindungsanordnung (67) ein Verbindungselement (70) umfasst, welches sich in der ersten Richtung (X) durch jeweilige Hohlräume (71, 83) des Hauptkörpers (20) und des Druckelements (35) erstreckt, und welches ein erstes Ende (72) aufweist, welches an dem Hauptkörper (20) angepasst ist, sowie ein zweites Ende (82), welches an dem Druckelement (35) angepasst ist, wobei das erste und das zweite elastische Element (75, 84) um das Verbindungselement (70) angeordnet sind, an verschiedenen Stellen entlang der ersten Richtung (X) und in einem Sitz (91), welcher von den Hohlräumen (71, 83) definiert wird.

3. Maschine nach Anspruch 2, wobei das erste elastische Element (75) in der ersten Richtung (X) zwischen dem ersten Ende (72) des Verbindungselements (70) und einem Bereich (35a) des Druckelements (35) zusammengedrückt wird.

4. Maschine nach Anspruch 3, wobei die elastische Verbindungsanordnung (67) weiter ein Anschlagelement (76) umfasst, welches verschieblich an dem Verbindungselement (70) entlang der ersten Richtung (X) gekoppelt ist und, auf einander gegenüberliegenden Seiten, mit dem Bereich (35a) des Druckelements (35) des ersten elastischen Elements (75) zusammenwirkt.

5. Maschine nach Anspruch 4, wobei das Anschlagelement (76) tassenförmig ist und eine Grundwand (77) aufweist, welche mit dem ersten elastischen Element (75) entlang der ersten Richtung (X) zusammenwirkt, sowie eine seitliche Wand (78), welche in dem Sitz (91) gleitet und das erste elastische Element (75) teilweise aufnimmt.

6. Maschine nach einem der Ansprüche 2 bis 5, wobei das zweite elastische Element (84) zwischen dem Druckelement (35) und dem Verbindungselement (70) entlang einer zweiten Richtung (B) quer zu der ersten Richtung (X) und dem Pfad (A) eingeklemmt ist.

7. Maschine nach einem der Ansprüche 2 bis 6, wobei das zweite elastische Element (84) sich in Verwendung frei in dem Sitz (91) entlang der ersten Richtung (X) zwischen dem zweiten Ende (82) des Verbindungselements (70) und dem ersten elastischen Element (75) bewegen kann.

8. Maschine nach einem der vorhergehenden Ansprüche, wobei das erste elastische Element (75) eine Schraubenfeder ist.

9. Maschine nach einem der vorhergehenden Ansprüche, wobei das zweite elastische Element (84) einen Ring aus Elastomermaterial umfasst.

10. Maschine nach Anspruch 9, wobei das zweite elastische Element (84) zwei Edelstahlringe umfasst, zwischen denen der elastische Ring eingeklemmt ist.

11. Maschine nach einem der vorhergehenden Ansprüche, wobei das Druckelement (35) die Form eines länglichen Stabs aufweist, welcher sich quer zu der ersten Richtung (X) und dem Pfad (A) erstreckt, und wobei zwei der elastischen Verbindungsanordnungen (67) vorgesehen sind, um das Druckelement (35) mit dem Hauptkörper (20) nahe den jeweiligen einander gegenüberliegenden Enden des Druckelements (35) zu verbinden.

12. Maschine nach einem der vorhergehenden Ansprüche, wobei die Betätigungsmittel Nockenführungsmittel (50, 51) umfassen zum Führen der Backe (12) und der Gegenbacke (13) während ihrer zyklischen Bewegungen im Verhältnis zu dem Rohr (14), und wobei die Backe (12) und die Gegenbacke (13) Nockenmitnehmermittel (52, 53) umfassen, welche mit den jeweiligen Nockenführungsmitteln (50, 51) zusammenwirken.

13. Maschine nach einem der vorhergehenden Ansprüche, wobei sie umfasst:
- einen ersten Kettenförderer (10) mit einer Reihe von Backen (12), welcher einen ersten Endlospfad (P) definiert, entlang dem die Backen (12) zugeführt werden; und
- einen zweiten Kettenförderer (11) mit einer Reihe von Gegenbacken (13), welcher einen zweiten Endlospfad (Q) definiert, entlang dem die Gegenbacken (13) zugeführt werden;
wobei der erste und der zweite Pfad (P; Q) jeweilige Arbeitsbereiche (P1, P2; Q1, Q2) umfassen, welche an den Lieferpfad (A) des Rohrs (14) von Verpackungsmaterial angrenzen und sich im Wesentlichen symmetrisch an einander gegenüberliegenden Seiten des Lieferpfads (A) erstrecken, so dass die Backen (12) mit den jeweiligen Gegenbacken (13) zusammenwirken, um das Rohr (14) an jeweiligen gleichmäßig beabstandeten Querschnitten (88) zu greifen.

## Revendications

1. Machine de conditionnement (1) destinée à produire des emballages étanches (2), contenant un produit alimentaire fluide, à partir d'un tube (14) réalisé en un matériau de conditionnement pouvant être soudé à chaud sous forme de feuille, délivré suivant un trajet d'alimentation (A), et rempli avec ledit produit alimentaire ; ladite machine (1) comprenant :
au moins une mâchoire (12) et une contre-mâchoire (13) pouvant être déplacées de manière cyclique entre une position de saisie, dans laquelle elles saisissent avec pression une section transversale dudit tube (14), et une position de libération, dans laquelle elles sont séparées du tube (14) ;
des moyens d'activation (50, 51) destinés à commander les mouvements cycliques de ladite mâchoire (12) et ladite contre-mâchoire (13) par rapport audit tube (14) ;
un moyen de chauffage (29) supporté par ladite mâchoire (12) afin de sceller à chaud le matériau de conditionnement du tube (14) ; et
un élément de pression (35) supporté par ladite contre-mâchoire (13) destiné à exercer une pression de saisie suivant une première direction (X) transversale audit trajet (A), afin de saisir le matériau de conditionnement du tube (14) contre ledit moyen de chauffage (29) dans la position de saisie de ladite mâchoire (12) et de ladite contre-mâchoire (13) ;
ladite contre-mâchoire (13) comprenant un corps principal (20), coopérant avec lesdits moyens d'activation (50, 51), et au moins un ensemble de liaison élastique (67) reliant ledit élément de pression (35) audit corps principal (20) d'une manière mobile suivant ladite première direction (X) par interposition de moyens élastiques (75, 84) ;
lesdits moyens élastiques comprenant au moins un premier élément élastique (75), compressé, suivant ladite première direction (X), entre ledit corps principal (20) et ledit élément de pression (35), et un second élément élastique (84) monté entre ledit corps principal (20) et ledit élément de pression (35) et qui peut être déformé afin de permettre la compensation de tout défaut d'alignement entre ladite mâchoire et ladite contre-mâchoire dans ladite position de saisie ;
caractérisée en que ledit second élément élastique (84) est agencé d'une manière librement mobile suivant ladite première direction (X) par rapport audit corps principal (20) et audit élément de pression (35) de telle sorte que la pression de saisie sur ledit tube (14) est définie entièrement par ledit premier élément élastique (75).

2. Machine selon la revendication 1, dans laquelle ledit ensemble de liaison élastique (67) comprend un élément de liaison (70) s'étendant suivant ladite première direction (X) à travers des cavités respectives (71, 83) dudit corps principal (20) et dudit élément de pression (35) et présentant une première extrémité (72) assemblée sur ledit corps principal (20) et une seconde extrémité (82) assemblée sur ledit élément de pression (35), lesdits premier et second éléments élastiques (75, 84) étant agencés autour dudit élément de liaison (70), à différents emplacements suivant ladite première direction (X) et à l'intérieur d'un siège (91) défini par lesdites cavités (71, 83).

3. Machine selon la revendication 2, dans laquelle ledit premier élément élastique (75) est compressé suivant ladite première direction (X) entre ladite première extrémité (72) dudit élément de liaison (70) et une partie (35a) dudit élément de pression (35).

4. Machine selon la revendication 3, dans laquelle ledit ensemble de liaison élastique (67) comprend, en outre, un élément de butée (76) couplé de manière à coulisser sur ledit élément de liaison (70) suivant ladite première direction (X) et coopérant, sur des côtés opposés, avec ladite partie (35a) dudit élément de pression (35) et ledit premier élément élastique (75).

5. Machine selon la revendication 4, dans laquelle ledit élément de butée (76) est en forme de coupelle et présente une paroi de base (77), coopérant avec ledit premier élément élastique (75) suivant ladite première direction (X), et une paroi latérale (78) coulissant à l'intérieur dudit siège (91) et contenant partiellement ledit premier élément élastique (75).

6. Machine selon l'une quelconque des revendications 2 à 5, dans laquelle ledit second élément élastique (84) est intercalé entre ledit élément de pression (35) et ledit élément de liaison (70) suivant une seconde direction (B) transversale par rapport à ladite première direction (X) et audit trajet (A).

7. Machine selon l'une quelconque des revendications 2 à 6, dans laquelle ledit second élément élastique (84) est, en utilisation, libre de se déplacer à l'intérieur dudit siège (91) suivant ladite première direction (X) entre ladite seconde extrémité (82) dudit élément de liaison (70) et ledit premier élément élastique (75).

8. Machine selon l'une quelconque des revendications précédentes, dans laquelle ledit premier élément élastique (75) est un ressort hélicoïdal.

9. Machine selon l'une quelconque des revendications précédentes, dans laquelle ledit second élément élastique (84) comprend une bague en un matériau élastomère.

10. Machine selon la revendication 9, dans laquelle ledit second élément élastique (84) comprend deux bagues en acier inoxydable, entre lesquelles ladite bague en élastomère est intercalée.

11. Machine selon l'une quelconque des revendications précédentes, dans laquelle ledit élément de pression (35) est sous la forme d'une barre allongée s'étendant transversalement par rapport à ladite première direction (X) et audit trajet (A), et dans laquelle deux desdits ensembles de liaison élastiques (67) sont agencés afin de relier ledit élément de pression (35) audit corps principal (20) à proximité des extrémités opposées respectives de l'élément de pression (35).

12. Machine selon l'une quelconque des revendications précédentes, dans laquelle ledit moyen d'activation comprend des moyens de guidage à came (50, 51) afin de guider ladite mâchoire (12) et ladite contre-mâchoire (13) au cours de leurs mouvements cycliques par rapport audit tube (14), et dans laquelle ladite mâchoire (12) et ladite contre-mâchoire (13) comprennent des moyens suiveurs de came (52, 53) coopérant avec lesdits moyens de guidage à came respectifs (50, 51).

13. Machine selon l'une quelconque des revendications précédentes, qui comprend :
un premier convoyeur à chaîne (10) comportant un certain nombre desdites mâchoires (12), et définissant un premier trajet sans fin (P) le long duquel lesdites mâchoires (12) sont agencées ; et
un second convoyeur à chaîne (11) comportant un certain nombre desdites contre-mâchoires (13), et définissant un second trajet sans fin (Q) le long duquel lesdites contre-mâchoires (13) sont agencées ;
ledit premier et ledit second trajets (P ; Q) comprenant des parties actives respectives (P1, P2 ; Q1, Q2) adjacentes audit trajet d'alimentation (A) du tube (14) de matériau de conditionnement, et s'étendant sensiblement symétriquement sur des côtés opposés dudit trajet d'alimentation (A), de telle sorte que lesdites mâchoires (12) coopèrent avec lesdites contre-mâchoires respectives (13) afin de saisir ledit tube (14) au niveau de sections transversales régulièrement espacées respectives (88).
